# FASCICULE DE BREVET EUROPEEN

(11) **EP 3 106 344 B1**
(45) Date de publication et mention de la délivrance du brevet: **16.05.2018**
(21) Numéro de dépôt: 16174469.3
(22) Date de dépôt: 14.06.2016
(51) Int. Cl.: B60N 2/48

(54) **APPUI-TÊTE DE SIÈGE DE VÉHICULE AUTOMOBILE**
KOPFSTÜTZE FÜR KRAFTFAHRZEUGSITZ
HEADREST FOR A MOTOR VEHICLE SEAT

(30) Priorité: 15.06.2015 FR 1555454
(43) Date de publication de la demande: 21.12.2016
(73) Titulaire: Cera TSC, 75008 Paris (FR)
(72) Inventeur: ADAM, Aurélie, 51000 Chalons en Champagne (FR)
(74) Mandataire: Sayettat, Julien Christian

(56) Documents cités:
- WO-A1-2014/196161
- JP-A- 2014 073 792
- US-A1- 2012 098 316

## Description

L'invention concerne un appui-tête de siège de véhicule automobile et un procédé de réalisation d'un tel appui-tête.

Il est connu de réaliser un appui-tête de siège de véhicule automobile, ledit appui-tête comprenant :
- une armature en tube métallique replié en forme générale de U renversé, de manière à définir deux branches parallèles de liaison à un dossier dudit siège, les extrémités supérieures desdites branches étant reliées entre elles par une entretoise,
- un bloc de mousse flexible de rembourrage surmoulant la partie haute de ladite armature,
- une coiffe de revêtement dudit bloc, ladite coiffe étant pourvue d'une bouche inférieure de retournement, ledit bloc surmoulant ladite coiffe, lesdites branches passant par deux orifices inférieurs respectifs prévus dans ladite coiffe,
- un étui monté sur ladite armature entre lesdites branches, ledit bloc surmoulant ledit étui,
- une masselotte d'amortissement des vibrations dudit appui-tête en roulage, ladite masselotte étant disposée dans ledit étui. Le document US-A-2012/098316 décrit un tel appui-tête. Pour réaliser un tel appui-tête, il faut notamment effectuer les opérations suivantes :
   - enfiler une des branches de l'armature dans un des orifices vers l'intérieur de ladite coiffe,
   - faire coulisser ladite armature dans ledit orifice tout en montant l'étui sur ladite armature entre lesdites branches,
   - enfiler ladite branche dans l'autre desdits orifices vers l'extérieur de ladite coiffe de manière à obtenir ladite armature montée sur ladite coiffe, lesdites branches passant chacune par un desdits orifices, ledit étui étant monté sur ladite armature à l'intérieur de ladite coiffe, de manière à pouvoir injecter dans le volume intérieur de ladite coiffe un mélange précurseur de mousse, de manière à former un bloc de rembourrage surmoulant ladite coiffe, ledit étui et ladite armature.

Ces opérations se font manuellement au travers de la bouche de retournement prévue dans la coiffe pour la retourner une fois sa confection réalisée.

La bouche est généralement de taille réduite et le montage de l'étui sur l'armature peut s'avérer malaisé.

L'invention a pour but de pallier cet inconvénient.

A cet effet, et selon un premier aspect, l'invention propose un appui-tête de siège de véhicule automobile, ledit appui-tête comprenant :
- une armature en tube métallique replié en forme générale de U renversé, de manière à définir deux branches parallèles de liaison à un dossier dudit siège, les extrémités supérieures desdites branches étant reliées entre elles par une entretoise,
- un bloc de mousse flexible de rembourrage surmoulant la partie haute de ladite armature,
- une coiffe de revêtement dudit bloc, ladite coiffe étant pourvue d'une bouche inférieure de retournement, ledit bloc surmoulant ladite coiffe, lesdites branches passant par deux orifices inférieurs respectifs prévus dans ladite coiffe,
- un étui monté sur ladite armature entre lesdites branches, ledit bloc surmoulant ledit étui,
- une masselotte d'amortissement des vibrations dudit appui-tête en roulage, ladite masselotte étant disposée dans ledit étui,
ledit appui-tête présentant en outre les caractéristiques suivantes :
- ledit étui est confectionné - par exemple par soudure, couture ou collage
   - à base d'une feuille de matériau souple,
- ledit étui est pourvu d'une boucle d'accrochage supérieure conformée pour entourer ladite entretoise,
- deux boucles d'accrochage élastiques latérales respectives sont associées - par exemple par soudure, couture ou collage - audit étui, chacune desdites boucles entourant respectivement chacune desdites branches.

Dans cette description, les termes de positionnement dans l'espace (haut, supérieur, inférieur, latéral, avant, hauteur...) sont pris en référence à l'appui-tête disposé en configuration d'utilisation dans le véhicule.

Avec l'agencement proposé, l'étui est positionné en hauteur au moyen de la boucle supérieure.

Les boucles latérales associées à l'étui, du fait de leur caractère élastique, peuvent se déformer durant le montage de l'étui sur l'armature qui s'en trouve facilité.

Selon un deuxième aspect, l'invention propose un procédé de réalisation d'un tel appui-tête.

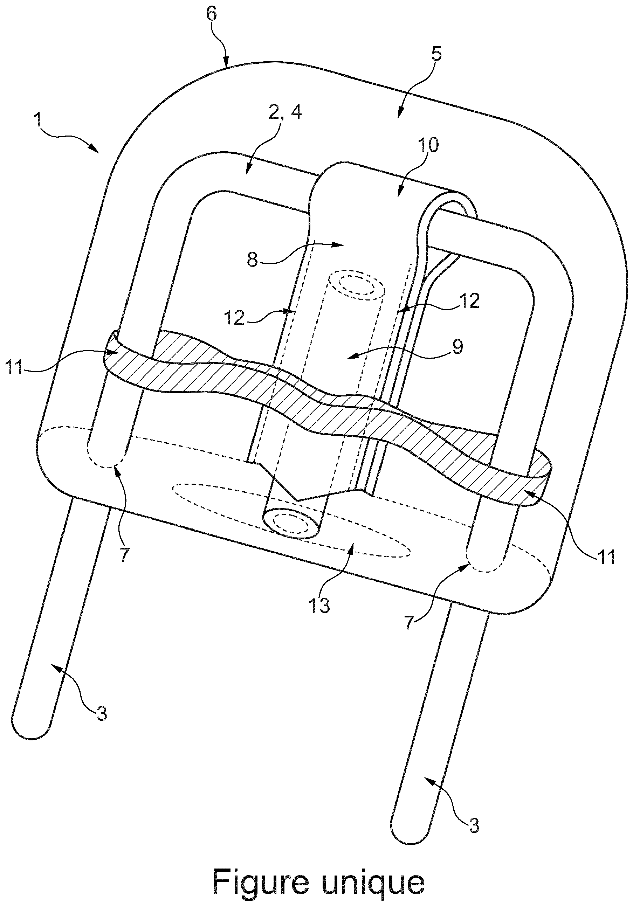

D'autres particularités et avantages de l'invention apparaîtront dans la description qui suit, faite en référence à la figure jointe qui est une vue schématique en perspective en semi transparence d'un appui-tête selon une réalisation.

En référence aux figures, on décrit un appui-tête 1 de siège de véhicule automobile, ledit appui-tête comprenant :
- une armature 2 en tube métallique replié en forme générale de U renversé, de manière à définir deux branches 3 parallèles de liaison à un dossier dudit siège, les extrémités supérieures desdites branches étant reliées entre elles par une entretoise 4,
- un bloc 5 de mousse flexible de rembourrage surmoulant la partie haute de ladite armature,
- une coiffe 6 de revêtement dudit bloc, ladite coiffe étant pourvue d'une bouche 13 inférieure de retournement, ledit bloc surmoulant ladite coiffe, lesdites branches passant par deux orifices inférieurs 7 respectifs prévus dans ladite coiffe,
- un étui 8 monté sur ladite armature entre lesdites branches, ledit bloc surmoulant ledit étui,
- une masselotte 9 d'amortissement des vibrations dudit appui-tête en roulage, ladite masselotte étant disposée dans ledit étui,
ledit appui-tête présentant en outre les caractéristiques suivantes :
- ledit étui est confectionné - par exemple par soudure, couture ou collage
   - à base d'une feuille de matériau souple,
- ledit étui est pourvu d'une boucle d'accrochage supérieure 10 conformée pour entourer ladite entretoise,
- deux boucles d'accrochage élastiques latérales 11 respectives sont associées - par exemple par soudure, couture ou collage - audit étui, chacune desdites boucles entourant respectivement chacune desdites branches.

Selon une réalisation non représentée, le U renversé peut être replié sensiblement d'un demi-tour vers l'avant pour créer une avancée de la partie haute de l'armature 2 par rapport à la tête du passager.

Selon une réalisation, la feuille de matériau souple est à base de mousse élastiquement compressible, notamment de polyuréthanne.

Selon la réalisation représentée, la boucle d'accrochage supérieure 10 est formée par un pliage de la feuille d'un demi-tour.

Selon la réalisation représentée, l'étui 8 vu par l'avant est en forme générale de rectangle allongé dans le sens de la hauteur, ledit rectangle présentant deux épaisseurs de feuille associées l'une à l'autre - par exemple par soudure, couture ou collage - par leurs bordures latérales 12. En outre, les boucles d'accrochage latérales 11 sont à base de bandes comprenant du caoutchouc.

Selon la réalisation représentée, les boucles latérales 11 sont issues d'une bande élastique principale unique.

Selon la réalisation représentée, la masselotte 9 est sous forme d'un tube métallique enfoncé en contact serrant dans l'étui.

L'emploi d'une feuille de matériau souple à base de mousse élastiquement compressible permet aisément d'assurer un tel contact serrant.

Selon la réalisation représentée, les boucles latérales 11 sont disposées en partie inférieure de l'étui 8.

On décrit enfin un procédé de réalisation d'un appui-tête 1, ledit procédé comprenant les étapes suivantes :
- prévoir une armature 2 en tube métallique replié en forme générale de U renversé, de manière à définir deux branches 3 parallèles de liaison à un dossier dudit siège, les extrémités supérieures desdites branches étant reliées entre elles par une entretoise 4,
- prévoir une coiffe 6 de revêtement pourvue de deux orifices inférieurs 7 et d'une bouche 13 inférieure de retournement,
- confectionner - par exemple par soudure, couture ou collage - un étui 8 à base d'une feuille de matériau souple, ledit étui étant pourvu d'une boucle d'accrochage supérieure 10, deux boucles d'accrochage élastiques latérales 11 respectives étant associées - par exemple par soudure, couture ou collage - audit étui,
- disposer une masselotte 9 dans ledit étui,
- enfiler une desdites branches dans un desdits orifices vers l'intérieur de ladite coiffe,
- faire coulisser ladite armature dans ledit orifice en enfilant au fur et à mesure lesdites boucles sur ladite armature, de sorte que ladite boucle supérieure entoure ladite entretoise et que lesdites boucles latérales entourent respectivement chacune desdites branches,
- enfiler ladite branche dans l'autre desdits orifices vers l'extérieur de ladite coiffe de manière à obtenir ladite armature montée sur ladite coiffe, lesdites branches passant chacune par un desdits orifices, ledit étui étant monté sur ladite armature à l'intérieur de ladite coiffe,
- disposer l'ensemble dans un moule,
- injecter dans le volume intérieur de ladite coiffe un mélange précurseur de mousse - notamment de polyuréthanne - élastiquement compressible, de manière à former un bloc 5 de rembourrage surmoulant ladite coiffe, ledit étui et ladite armature,
- après expansion de la mousse, démouler l'appui-tête 1 obtenu.

## Revendications

1. Appui-tête (1) de siège de véhicule automobile, ledit appui-tête comprenant :
• une armature (2) en tube métallique replié en forme générale de U renversé, de manière à définir deux branches (3) parallèles de liaison à un dossier dudit siège, les extrémités supérieures desdites branches étant reliées entre elles par une entretoise (4),
• un bloc (5) de mousse flexible de rembourrage surmoulant la partie haute de ladite armature,
• une coiffe (6) de revêtement dudit bloc, ladite coiffe étant pourvue d'une bouche (13) inférieure de retournement, ledit bloc surmoulant ladite coiffe, lesdites branches passant par deux orifices inférieurs (7) respectifs prévus dans ladite coiffe,
• un étui (8) monté sur ladite armature entre lesdites branches, ledit bloc surmoulant ledit étui,
• une masselotte (9) d'amortissement des vibrations dudit appui-tête en roulage, ladite masselotte étant disposée dans ledit étui,
ledit appui-tête étant **caractérisé en ce que** :
• ledit étui est confectionné - par exemple par soudure, couture ou collage
- à base d'une feuille de matériau souple,
• ledit étui est pourvu d'une boucle d'accrochage supérieure (10) conformée pour entourer ladite entretoise,
• deux boucles d'accrochage élastiques latérales (11) respectives sont associées - par exemple par soudure, couture ou collage - audit étui, chacune desdites boucles entourant respectivement chacune desdites branches.

2. Appui-tête selon la revendication 1, **caractérisé en ce que** la feuille de matériau souple est à base de mousse élastiquement compressible, notamment de polyuréthanne.

3. Appui-tête selon l'une des revendications 1 ou 2, **caractérisé en ce que** la boucle d'accrochage supérieure (10) est formée par un pliage de la feuille d'un demi-tour.

4. Appui-tête selon l'une quelconque des revendications 1 à 3, **caractérisé en ce que** l'étui (8) vu par l'avant est en forme générale de rectangle allongé dans le sens de la hauteur, ledit rectangle présentant deux épaisseurs de feuille associées l'une à l'autre - par exemple par soudure, couture ou collage - par leurs bordures latérales (12).

5. Appui-tête selon l'une quelconque des revendications 1 à 4, **caractérisé en ce que** les boucles d'accrochage latérales (11) sont à base de bandes comprenant du caoutchouc.

6. Appui-tête selon l'une quelconque des revendications 1 à 5, **caractérisé en ce que** les boucles d'accrochage latérales (11) sont issues d'une bande élastique principale unique.

7. Appui-tête selon l'une quelconque des revendications 1 à 6, **caractérisé en ce que** la masselotte (9) est sous forme d'un tube métallique enfoncé en contact serrant dans l'étui (8).

8. Appui-tête selon l'une quelconque des revendications 1 à 7, **caractérisé en ce que** les boucles latérales (11) sont disposées en partie inférieure de l'étui (8).

9. Procédé de réalisation d'un appui-tête selon l'une quelconque des revendications 1 à 8, ledit procédé comprenant les étapes suivantes :
• prévoir une armature (2) en tube métallique replié en forme générale de U renversé, de manière à définir deux branches (3) parallèles de liaison à un dossier dudit siège, les extrémités supérieures desdites branches étant reliées entre elles par une entretoise (4),
• prévoir une coiffe (6) de revêtement pourvue de deux orifices inférieurs (7) et d'une bouche (13) inférieure de retournement,
• confectionner - par exemple par soudure, couture ou collage - un étui (8) à base d'une feuille de matériau souple, ledit étui étant pourvu d'une boucle d'accrochage supérieure (10), deux boucles d'accrochage élastiques latérales (11) respectives étant associées - par exemple par soudure, couture ou collage - audit étui,
• disposer une masselotte (9) dans ledit étui,
• enfiler une desdites branches dans un desdits orifices vers l'intérieur de ladite coiffe,
• faire coulisser ladite armature dans ledit orifice en enfilant au fur et à mesure lesdites boucles sur ladite armature, de sorte que ladite boucle supérieure entoure ladite entretoise et que lesdites boucles latérales entourent respectivement chacune desdites branches,
• enfiler ladite branche dans l'autre desdits orifices vers l'extérieur de ladite coiffe de manière à obtenir ladite armature montée sur ladite coiffe, lesdites branches passant chacune par un desdits orifices, ledit étui étant monté sur ladite armature à l'intérieur de ladite coiffe,
• disposer l'ensemble dans un moule,
• injecter dans le volume intérieur de ladite coiffe un mélange précurseur de mousse - notamment de polyuréthanne - élastiquement compressible, de manière à former un bloc (5) de rembourrage surmoulant ladite coiffe, ledit étui et ladite armature,
• après expansion de la mousse, démouler l'appui-tête (1) obtenu.

## Patentansprüche

1. Kopfstütze (1) für Kraftfahrzeugsitz, wobei die Kopfstütze umfasst:
- eine Armierung (2) aus Metallrohr, das in eine allgemeine Form eines umgekehrten U gebogen ist, so dass zwei parallele Schenkel (3) in Verbindung mit einer Rückenlehne des Sitzes definiert werden, wobei die oberen Enden der Schenkel durch eine Strebe (4) miteinander verbunden sind,
- einen flexiblen Polsterschaumstoffblock (5), der den oberen Teil der Armierung überformt,
- eine Überzugshaube (6) des Blocks, wobei die Haube mit einem unteren Wendeschlitz (13) ausgestattet ist, wobei der Block die Haube überformt, wobei die Schenkel durch zwei jeweilige untere Öffnungen (7) verlaufen, die in der Haube vorgesehen sind,
- ein Etui (8), das auf der Armierung zwischen den Schenkeln angebracht ist, wobei der Block das Etui überformt,
- ein Dämpfungsgewicht (9) der Schwingungen der Kopfstütze beim Fahren, wobei das Gewicht in dem Etui angeordnet ist,
wobei die Kopfstütze **dadurch gekennzeichnet ist, dass**:
- das Etui auf der Basis eines elastischen Materialbogens beispielsweise durch Schweißen, Nähen oder Kleben angefertigt ist,
- das Etui mit einer oberen Befestigungsschlaufe (10) ausgestattet ist, die ausgebildet ist, um die Strebe zu umgeben,
- zwei jeweilige seitliche elastische Befestigungsschlaufen (11) beispielsweise durch Schweißen, Nähen oder Kleben mit dem Etui verbunden sind, wobei jede der Schlaufen jeweils jeden der Schenkel umgibt.

2. Kopfstütze nach Anspruch 1, **dadurch gekennzeichnet, dass** der elastische Materialbogen auf der Basis von elastisch komprimierbarem Schaumstoff, vor allem von Polyurethan, ist.

3. Kopfstütze nach einem der Ansprüche 1 oder 2, **dadurch gekennzeichnet, dass** die obere Befestigungsschlaufe (10) durch ein Biegen des Bogens um eine halbe Umdrehung gebildet ist.

4. Kopfstütze nach einem der Ansprüche 1 bis 3, **dadurch gekennzeichnet, dass** das Etui (8), von vorn gesehen, die allgemeine Form eines in Richtung der Höhe länglichen Rechtecks hat, wobei das Rechteck zwei Bogendicken aufweist, die beispielsweise durch Schweißen, Nähen oder Kleben an ihren Seitenrändern (12) miteinander verbunden sind.

5. Kopfstütze nach einem der Ansprüche 1 bis 4, **dadurch gekennzeichnet, dass** die seitlichen Befestigungsschlaufen (11) auf der Basis von Bändern sind, die Kautschuk umfassen.

6. Kopfstütze nach einem der Ansprüche 1 bis 5, **dadurch gekennzeichnet, dass** die seitlichen Befestigungsschlaufen (11) aus einem einzigen elastischen Hauptband hervorgehen.

7. Kopfstütze nach einem der Ansprüche 1 bis 6, **dadurch gekennzeichnet, dass** das Gewicht (9) in Form eines in Spannkontakt in das Etui (8) eingesteckten Metallrohrs ist.

8. Kopfstütze nach einem der Ansprüche 1 bis 7, **dadurch gekennzeichnet, dass** die seitlichen Schlaufen (11) im unteren Teil des Etuis (8) angeordnet sind.

9. Verfahren zur Herstellung einer Kopfstütze nach einem der Ansprüche 1 bis 8, wobei das Verfahren die folgenden Schritte umfasst:
- Bereitstellen einer Armierung (2) aus Metallrohr, das in eine allgemeine Form eines umgekehrten U gebogen ist, so dass zwei parallele Schenkel (3) in Verbindung mit einer Rückenlehne des Sitzes gebildet werden, wobei die oberen Enden der Schenkel durch eine Strebe (4) miteinander verbunden sind,
- Bereitstellen einer Überzugshaube (6), die mit zwei unteren Öffnungen (7) und einem unteren Wendeschlitz (13) ausgestattet ist,
- Anfertigen, beispielsweise durch Schweißen, Nähen oder Kleben, eines Etuis (8) auf der Basis eines elastischen Materialbogens, wobei das Etui mit einer oberen Befestigungsschlaufe (10) ausgestattet ist, wobei zwei jeweilige seitliche elastische Befestigungsschlaufen (11) beispielsweise durch Schweißen, Nähen oder Kleben mit dem Etui verbunden sind,
- Anordnen eines Gewichts (9) in dem Etui,
- Einfädeln von einem der Schenkel in eine der Öffnungen in Richtung des Inneren der Haube,
- Veranlassen des Hineingleitens der Armierung in die Öffnung durch schrittweises Einfädeln der Schlaufen auf die Armierung, so dass die obere Schlaufe die Strebe umgibt und dass die seitlichen Schlaufen jeweils jeden der Schenkel umgeben,
- Einfädeln des Schenkels in die andere der Öffnungen nach außerhalb der Haube derart, dass die auf der Haube angebrachte Armierung erhalten wird, wobei die Schenkel jeder durch eine der Öffnungen verlaufen, wobei das Etui auf der Armierung im Inneren der Haube angebracht ist,
- Anordnen der Einheit in einer Form,
- Einleiten, in das innere Volumen der Haube, eines elastisch komprimierbaren Schaumstoffvorläufergemischs, insbesondere aus Polyurethan, so dass ein Polsterschaumstoffblock (5) gebildet wird, der die Haube, das Etui und die Armierung überformt,
- nach Ausdehnung des Schaumstoffs, Entformen der erhaltenen Kopfstütze (1).

## Claims

1. Headrest (1) for motor vehicle seat, said headrest comprising:
- a reinforcement (2) made of a folded metal tube in the general shape of an inverted U, in such a way as to define two parallel branches (3) for connection to a backrest of said seat, the upper ends of said branches being connected together by a spacer (4),
- a block (5) of flexible foam padding overmoulding the top portion of said reinforcement,
- a coating cover (6) of said block, said cover being provided with a lower turning mouth (13), said block overmoulding said cover, said branches passing through two respective lower orifices (7) provided in said cover,
- a case (8) mounted on said reinforcement between said branches, said bloc overmoulding said case,
- a weight (9) for absorbing the vibrations of said headrest when moving, said weight being arranged in said case,
said headrest being **characterised in that**:
- said case is manufactured - for example by welding, sewing or gluing - with a flexible material sheet base,
- said case is provided with an upper fastening loop (10) shaped to surround said spacer,
- two respective side elastic fastening loops (11) are associated - for example by welding, sewing or gluing - to said case, with each one of said loops respectively surrounding each one of said branches.

2. Headrest according to claim 1, **characterised in that** the sheet of flexible material has an elastically compressible foam, in particular polyurethane.

3. Headrest according to one of claims 1 or 2, **characterised in that** the upper fastening loop (10) is formed by a folding of the sheet by a half-turn.

4. Headrest according to any of claims 1 to 3, **characterised in that** the case (8) seen from the front has the general shape of a rectangle extended in the heightwise direction, said rectangle having two sheet thicknesses associated with one another - for example by welding, sewing or gluing - via their side edges (12).

5. Headrest according to any of claims 1 to 4, **characterised in that** the side fastening loops (11) have a base of strips comprising rubber.

6. Headrest according to any of claims 1 to 5, **characterised in that** the side fastening loops (11) come from a single main elastic strip.

7. Headrest according to any of claims 1 to 6, **characterised in that** the weight (9) is in the form of an embedded metal tube in tight contact in the case (8).

8. Headrest according to any of claims 1 to 7, **characterised in that** the side loops (11) are arranged in the lower portion of the case (8).

9. Method for the production of a headrest according to any of claims 1 to 8, said method comprising the following steps:
- providing a reinforcement (2) made of a folded metal tube in the general shape of an inverted U, in such a way as to define two parallel branches (3) for connection to a backrest of said seat, with the upper ends of said branches being connected together by a spacer (4),
- providing a coating cover (6) provided with two lower orifices (7) and with a lower turning mouth (13),
- manufacturing - for example by welding, sewing or gluing - a case (8) with a flexible material sheet base, said case being provided with an upper fastening loop (10), two respective side elastic fastening loops (11) being associated - for example by welding, sewing or gluing - to said case,
- having a weight (9) in said case,
- threading one of said branches into one of said orifices towards the inside of said cover,
- sliding said reinforcement into said orifice by progressively threading said loops over said reinforcement, in such a way that said upper loop surrounds said spacer and that said side loops respectively surround each one of said branches,
- threading said branch in the other of said orifices towards the outside of said cover in such a way as to obtain said reinforcement mounted on said cover, said branches each passing through one of said orifices, said case being mounted on said reinforcement inside said cover,
- arranging the whole in a mould,
- injecting into the inside volume of said cover a precursor foam mixture - in particular polyurethane - elastically compressible, in such a way as to form a block (5) of padding overmoulding said cover, said case and said reinforcement,
- after expansion of the foam, unmoulding the headrest (1) obtained.
